# EUROPEAN PATENT APPLICATION

(11) **EP 2 610 660 A1**
(43) Date of publication of application: **03.07.2013**
(21) Application number: 12199113.7
(22) Date of filing: 21.12.2012
(51) Int. Cl.: G02B 6/44, G02B 6/02

(54) **Connector-incorporated multi-core optical fiber**

(30) Priority: 26.12.2011 JP 2011283865
(71) Applicant: Sumitomo Electric Industries, Ltd., Osaka-shi, Osaka 541-0041 (JP)
(72) Inventor: Sasaki, Takashi, Kanagawa 244-8588 (JP)
(74) Representative: HOFFMANN EITLE

(57) **Abstract**

The present invention relates to a connector-incorporated multi-core optical fiber with a high optical transmission spatial density and with an excellent bending property. An intermediate region of a fiber body of the connector-incorporated multi-core optical fiber is a region located between bundle sections in which a plurality of optical fibers are integrated by a coupling material, and the coupling material is removed in part from this intermediate region, thereby to expose parts of the respective optical fibers located in the intermediate region.

## Description

### BACKGROUND OF THE INVENTION

### Field of the Invention

The present invention relates to a connector-incorporated multi-core optical fiber.

### Related Background of the Invention

In recent years, data transmission with optical signals is becoming necessary for reduction of consumption power and realization of large capacity signal processing in data communication-related equipment such as blade servers. It necessitates connection of devices in a high spatial density. For improvement in optical transmission spatial density, for example, B. G. Lee, et al., "120-Gb/s 100-m Transmission in a Single Multicore Multimode Fiber Containing Six Cores Interfaced with a Matching VCEL Array," in IEEE Photonic Society Summer Topical meeting 2010, TuD4.4 (2010) (Non Patent Literature 1) describes an attempt to transmit optical signals through the use of a multimode multi-core optical fiber having a plurality of cores in a common cladding.

### SUMMARY OF THE INVENTION

The inventor conducted research on the foregoing conventional technology and found the problem as described below.

Namely, when optical signals are transmitted using the multi-core optical fiber, it is necessary to take the problem such as crosstalk between cores into consideration. Specifically, it is necessary to perform adjustment of propagation constants of the respective cores and to ensure a sufficient distance between the cores. Arakawa, et al., TECHNICAL REPORT OF IEICE, vol. 111, no. 297, OCS2011-104, pp.65-69, November 2011 (Non Patent Literature 2) reports that the distance between cores needs to be not less than 40 µm. Since there is also concern that a leakage loss is caused by optical coupling of propagation modes in the outermost cores with the coating through the cladding, the outermost cores need to be located at some distance from the outer periphery of the cladding. For these reasons, the cladding diameter of the multi-core optical fiber (fiber outer diameter) becomes larger than a standard fiber whose diameter is 125µm. Since it is difficult to bend the optical fiber with the large cladding diameter in a small bending radius without fracture, such optical fiber is not suitable for optical signal transmission in a module.

The present invention has been accomplished to solve the above-described problem and it is an object of the present invention to provide a connector-incorporated multi-core optical fiber with a high optical transmission spatial density and with an excellent bending property while avoiding the fracture when it is bent.

A connector-incorporated multi-core optical fiber according to the present invention, as a first aspect, comprises a fiber body extending along a predetermined axis, and a connector fixed to one end of the fiber body. The fiber body consists of a plurality of optical fibers assembled, and a coupling material integrating these optical fibers in a state in which each of the optical fibers is enclosed therein. Particularly, the coupling material is removed in part in an intermediate region of the fiber body, whereby parts of the respective optical fibers are exposed. The intermediate region of the fiber body, i.e., the region where the parts of the respective optical fibers are exposed, is a region located between a position at a first distance from the connector and a position at a second distance longer than the first distance from the connector. When the fiber body is bent in this intermediate region, different from sections in which the optical fibers are integrated by the coupling material (bundle sections), lateral stress caused by addition of bending is drastically reduced on each optical fiber, thereby realizing an excellent bending property and low fracture probability.

As a second aspect applicable to the first aspect, preferably, ends of the respective optical fibers located at one end of the connector-incorporated multi-core optical fiber (the end where the connector is fixed) are inserted in a ferrule of the connector in a state in which fiber outer diameters of the respective ends are adjusted to arrange the cores of the respective ends in a designed core pitch therebetween, by application of a technique capable of adjusting fiber outer diameter such as chemical etching. As a third aspect applicable to at least either of the first and second aspects, the ends of the respective optical fibers located at one end of the connector-incorporated multi-core optical fiber (the end where the connector is fixed) may be inserted together with one or more fiber arrangement members in the ferrule of the connector.

As a fourth aspect applicable to at least any one of the first to third aspects, deviations of fiber outer diameters of the respective optical fibers are preferably not more than 1 µm. As a fifth aspect applicable to at least any one of the first to fourth aspects, deviations of fiber outer diameters of the respective optical fibers are preferably not more than 0.5 µm.

Furthermore, as a sixth aspect applicable to at least any one of the first to fifth aspects, bending losses in a bending radius of 10 mm at the wavelength of 1550 nm, of the respective optical fibers are preferably not more than 0.75 dB/turn. As a seventh aspect applicable to at least any one of the first to sixth aspects, bending losses in a bending radius of 5 mm at the wavelength of 1550 nm, of the respective optical fibers are preferably not more than 0.15 dB/turn. As an eighth aspect applicable to at least any one of the first to seventh aspects, bending losses in a bending radius of 3 mm at the wavelength of 1550 nm, of the respective optical fibers are preferably not more than 0.3 dB/turn.

### BRIEF DESCRIPTION OF THE DRAWINGS

Fig. 1 is a drawing showing a schematic structure of a connector-incorporated multi-core optical fiber according to the first embodiment;

Fig. 2 is a drawing showing a typical structure of an optical fiber applicable to the connector-incorporated multi-core optical fibers according to the first and second embodiments;

Fig. 3 is a table showing examples of optical fibers applicable to the connector-incorporated multi-core optical fibers according to the first and second embodiments;

Fig. 4 is a drawing showing a configuration of the connector-incorporated multi-core optical fiber according to the first embodiment (before formation of a bent section);

Figs. 5A and 5B are drawings showing a structure of the connector-incorporated multi-core optical fiber according to the first embodiment (after formation of the bent section);

Fig. 6 is a drawing showing an example of a sectional structure (corresponding to the section along the line I-I in Fig. 1) at one end of the connector-incorporated multi-core optical fiber according to the first embodiment;

Fig. 7 is a drawing showing another example of a sectional structure (corresponding to the section along the line I-I in Fig. 1) at one end of the connector-incorporated multi-core optical fiber according to the first embodiment;

Figs. 8A to 8E are drawings for explaining a method for improvement in optical fiber packaging density of the connector-incorporated multi-core optical fiber according to the first embodiment; and

Figs. 9A and 9B are drawings showing a schematic structure of the connector-incorporated multi-core optical fiber according to the second embodiment.

### DESCRIPTION OF THE PREFERRED EMBODIMENTS

Embodiments of the present invention will be described below in detail with reference to the accompanying drawings. The same elements will be denoted by the same reference symbols in the description of the drawings, without redundant description.

### (First Embodiment)

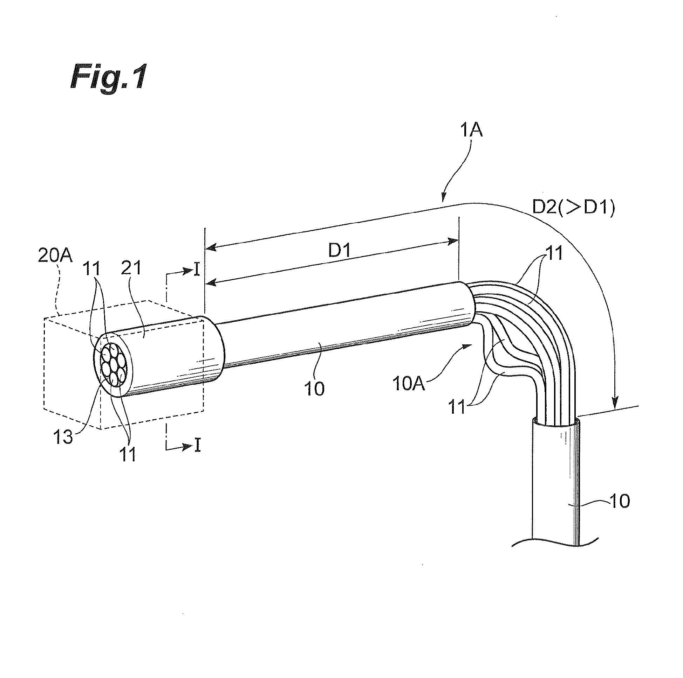

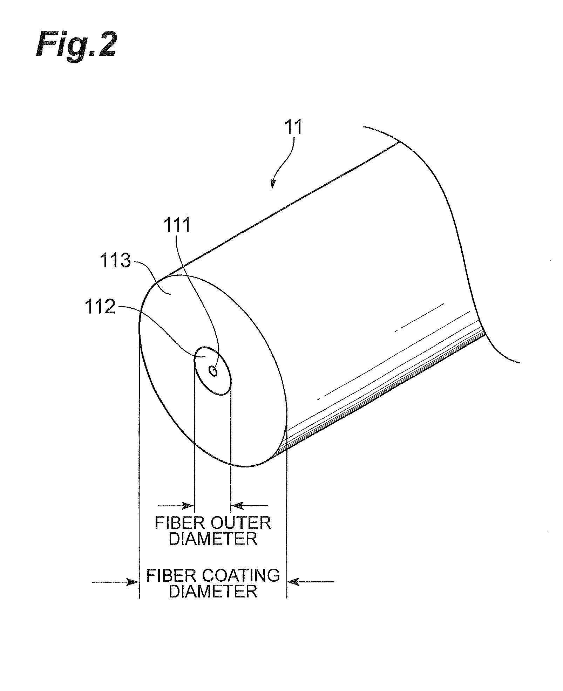

Fig. 1 is a drawing showing a schematic structure of a connector-incorporated multi-core optical fiber according to the first embodiment. Fig. 2 is a drawing showing a typical structure of an optical fiber applicable to the connector-incorporated multi-core optical fibers according to the first and second embodiments.

As shown in Fig. 1, the connector-incorporated multi-core optical fiber 1A according to the first embodiment is provided with a fiber body extending along a predetermined axis, and a connector 20A fixed to one end of the fiber body. The fiber body includes a plurality of optical fibers 11, and is composed of bundle sections 10 in which a coupling material 13 encloses each of the optical fibers 11, whereby these optical fibers 11 are integrated by the coupling material 13, and an intermediate region 10A (bent section) located between the bundle sections 10. The coupling material 13 is removed in part from the bent section 10A, whereby each of the optical fibers 11 is exposed.

A ferrule 21 of the connector 20A is fixed to one end of the fiber body. Namely, the ends of the respective optical fibers 11, which are located at one end of the fiber body, are inserted in the ferrule 21 of the connector 20A in a state in which fiber outer diameters of the respective fibers are adjusted. Deviations of the fiber outer diameters of the respective optical fibers 11 are not more than 1 µm and preferably not more than 0.5 µm to realize a precise allocation of the position of each core.

The bent section 10A provided in the fiber body is located in a region between a position at a distance D1 from the connector 20A (precisely, the ferrule 21 of the connector 20A) fixed at one end of the fiber body and a position at a distance D2 (> D1) from the connector 20A.

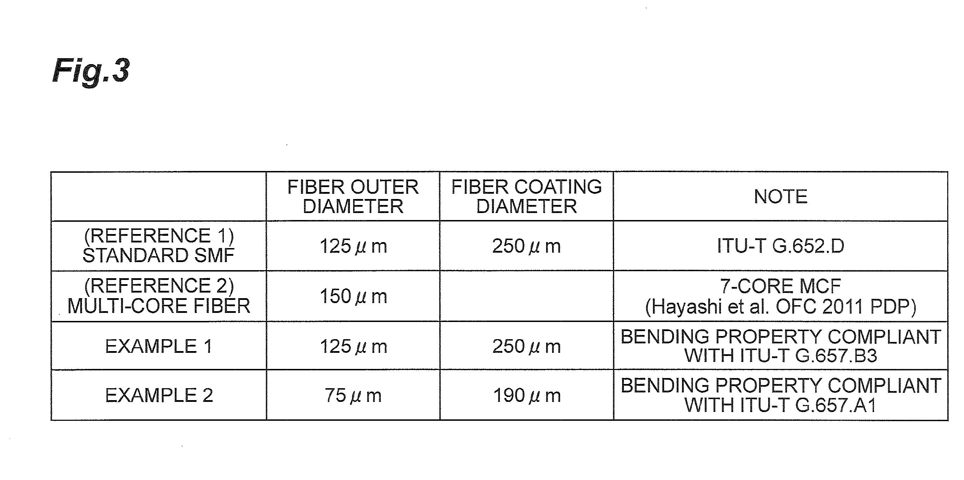

The optical fiber 11 applicable to the connector-incorporated multi-core optical fiber 1A having the above-described structure is provided, as shown in Fig. 2, with a bare fiber consisting primarily of silica glass, and, if necessary, a resin coating 113 provided on the outer periphery of the bare fiber. The bare fiber is provided with a core 111 extending along a predetermined axis and having a predetermined refractive index, and a cladding 112 provided on the outer periphery of the core 111 and having a refractive index lower than that of the core 111. In the present specification, the outer diameter of the bare fiber will be referred to as "fiber outer diameter" and the outer diameter of the resin coating 113 as "fiber coating outer diameter." The optical fiber 11 having the structure shown in Fig. 2 is also applicable to the connector-incorporated multi-core optical fiber 1B according to the second embodiment described below. Fig. 3 shows examples of optical fibers applicable to the connector-incorporated multi-core optical fibers 1A, 1B according to the first and second embodiments.

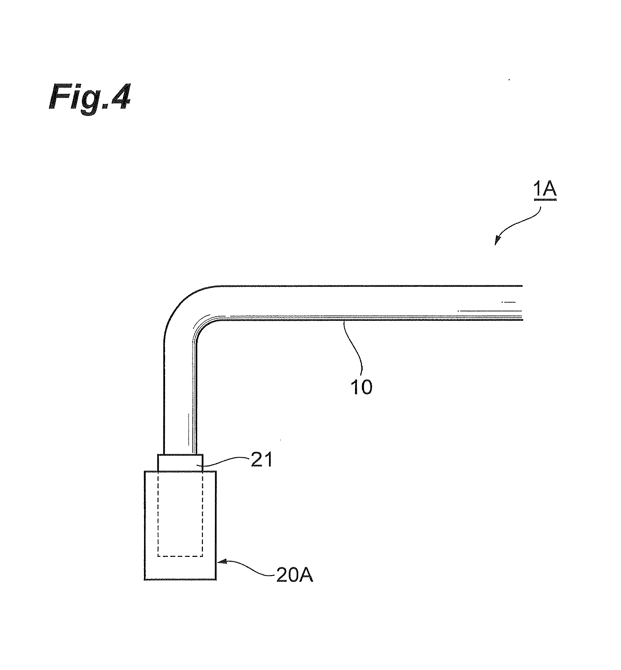

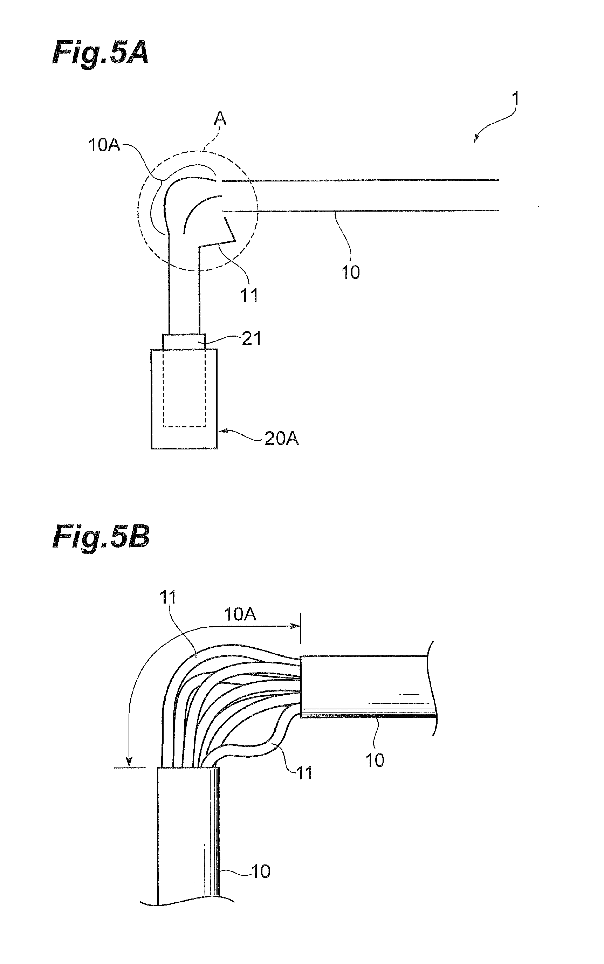

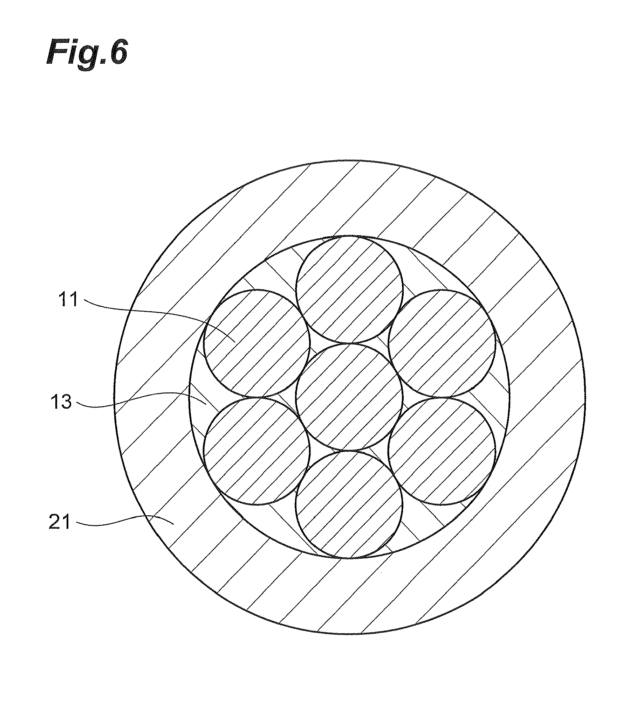

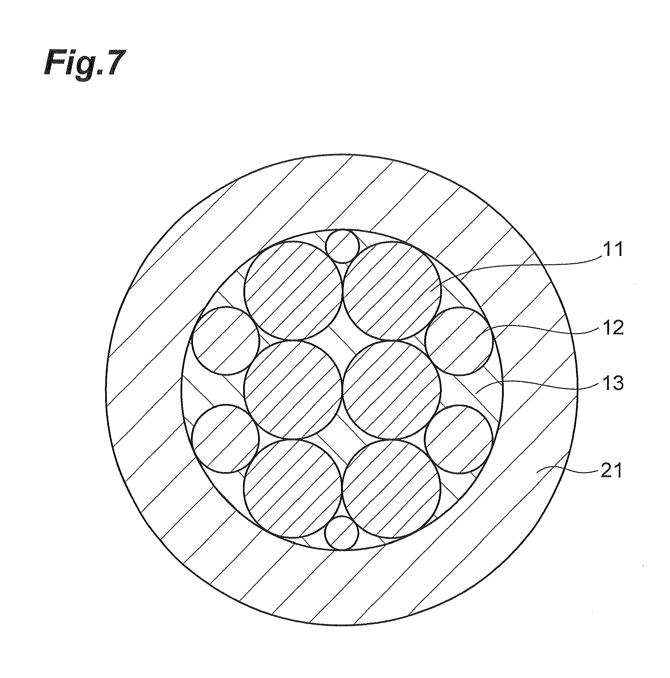

Fig. 4 is a drawing showing a configuration of the connector-incorporated multi-core optical fiber 1A according to the first embodiment (before formation of the bent section). Figs. 5A and 5B are drawings showing a structure of the connector-incorporated multi-core optical fiber 1A according to the first embodiment (after formation of the bent section). Fig. 5B is an enlarged view of region A enclosed by a dashed line in Fig. 5A. Furthermore, Fig. 6 is a drawing showing an example of a sectional structure (corresponding to the section along the line I-I in Fig. 1) at one end of the connector-incorporated multi-core optical fiber according to the first embodiment, and Fig. 7 a drawing showing another example of the sectional structure (corresponding to the section along the line I-I in Fig. 1) at one end of the connector-incorporated multi-core optical fiber according to the first embodiment.

The connector-incorporated multi-core optical fiber 1A before formation of the bent section is provided with the fiber body in which the bundle sections 10 are formed through the bent section 10A, and the connector 20A (including the ferrule 21) fixed at one end of the bundle section 10.

As described above, the bundle section 10 is a section in which a plurality of optical fibers 11 (seven fibers in Fig. 6) assembled are integrated by the coupling material 13. Each of the optical fibers 11 is provided with the core 111 of silica glass and the cladding 112 and the outer periphery of the cladding is further covered by the resin coating 113. The optical fibers 11 are integrated each by the coupling material 13 in a predetermined longitudinal range on the one end side to constitute the bundle section 10. This structure is a substantial multi-core optical fiber configuration to achieve a high optical transmission spatial density. The coupling material 13 is a resin coating that can be readily removed with a brush or the like. One end of the bundle section 10 is inserted in the single-bore ferrule 21 forming the connector 20A, whereby the connector 20A is fixed to one end of the bundle section 10.

For precise arrangement of the cores of the optical fibers 11 in the ferrule 21, the optical fibers 11 adjacent to each other are in contact with each other and the optical fibers 11 at outermost positions are in contact with the inner wall of the ferrule 21. For packaging a plurality of optical fibers 11 in contact, as shown in Fig. 7, it is also possible to adopt a configuration wherein spacer rods 12 like those used in the Stack & Draw operation, for example, in manufacture of optical fibers of microstructure may be interposed as fiber arrangement members in fiber gaps. The spacer rods 12 are preferably comprised of a material having the same hardness as that of the materials of the core 111 and cladding 112 of the optical fibers 1, and are preferably comprised of the same silica glass as the core 111 and cladding 112 of the optical fibers 11.

As shown in Figs. 5A and 5B, the coupling material 13 is removed from the bundle section 10 in a partial longitudinal range of the fiber body (the bent section 10A between the bundle sections 10), whereby each of the optical fiber 11 constitutes a single core fiber. This section (bent section 10A) without the coupling material 13 has lower rigidity and improved flexibility and it is thus easy to bend the optical fibers 11 in a small radius of curvature. For example, as in the case where the optical fiber is used inside a device, the connector-incorporated multi-core optical fiber 1A can be installed with the bent section 10A near the connector 20A being bent at 90°.

Each of the optical fibers 11 is preferably one with a small bending loss in a bent state and it is preferable, for example, to use "bending loss insensitive optical fibers" compliant with ITU-T G.657.B (whose bending loss in a bending radius of 5 mm at the wavelength of 1550 nm is not more than 0.15 dB/turn) or ITU-T G657.A1 (whose bending loss in a bending radius of 10 mm at the wavelength of 1550 nm is not more than 0.75 dB/turn).

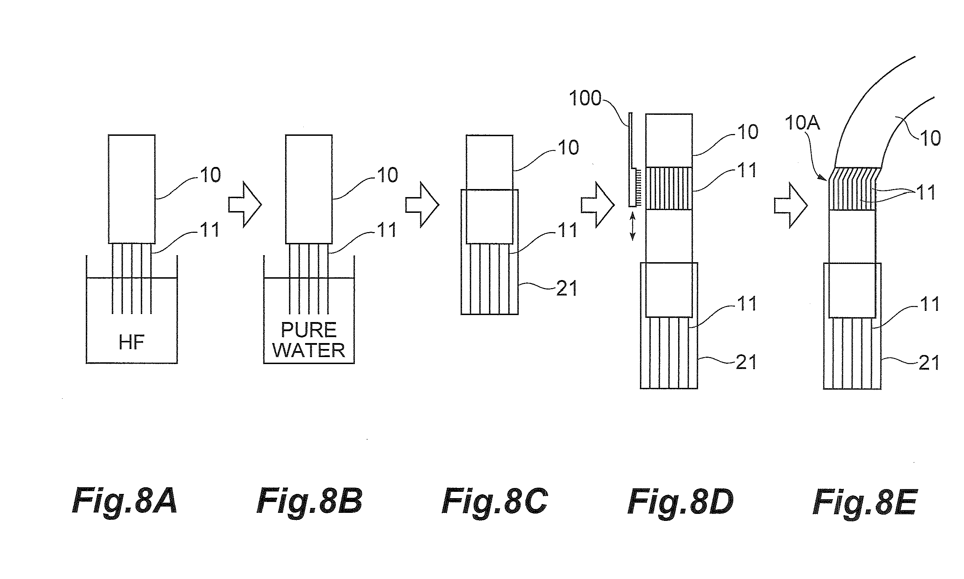

Figs. 8A to 8E are drawings for explaining a method for improving the optical fiber packaging density of the connector-incorporated multi-core optical fiber 1A according to the first embodiment.

First, at a tip end of the connector-incorporated multi-core optical fiber 1A, the resin coating 113 is removed from the ends of the respective optical fibers 11 in the bundle section 10, and thereafter, the ends are immersed in an aqueous solution of hydrofluoric acid (HF) (Fig. 8A). This process results in adjusting the outer diameters of the ends of the respective optical fibers 11 (fiber outer diameters) to 45 µm. Those ends are then rinsed with pure water (Fig. 8B). The ends of the respective optical fibers 11 in the bundle section 10 are fixed to the ferrule 21 in a state in which they are inserted in the ferrule 21 (Fig. 8C). The coupling material 13 is removed from a partial longitudinal range of the fiber body with a brush 100, whereby each of the optical fibers 11 turns into a single core fiber (Fig. 8D). Then the part from which the coupling material 13 has been removed is bent (Fig. 8E). In this manner, the optical fiber packaging density can be increased in the ferrule 21.

The fiber body (including the bundle section 10) may be produced as follows: in production of optical fibers 11 by drawing an optical fiber preform, coated optical fibers with the small glass diameter (fiber outer diameter) of several tens of µm are formed and they are assembled and integrated by the coupling material 13 to form the fiber body. The optical fibers 11 have low rigidity and improved flexibility because of the small glass diameter and reduce crosstalk because of inclusion of a coating layer.

The fiber outer diameters of the respective optical fibers 11 in the bundle section 10 are preferably uniform. In the method shown in Figs. 8A to 8E, the optical fibers 11 can be etched into uniform fiber outer diameters because they are bundled. For realizing the core eccentricity error (< 1 µm) required of standard optical fiber connectors, deviations of the fiber outer diameters among the optical fibers 11 are also preferably not more than 1 µm. For this reason, the optical fibers to be bundled are preferably selected preliminarily from such optical fibers that the fiber outer diameter is within the deviation of not more than 0.5 µm. It is also possible to adopt the following configuration: after completion of the outer diameter adjustment by etching, the spacer rods 12 with an optional outer diameter are used in order to locate the ferrule 21 at the predetermined position, so that the optical fibers 11 at the outermost positions can be kept in contact substantially with the inner wall of the ferrule 21.

Since the rigidity decreases in inverse proportion to the sectional area of the optical fiber, the optical fiber after unbundled improves its flexibility by a degree of the rigidity of the coupling material 13. When the glass diameter is further decreased, the flexibility of the glass part improves, so as to enable better low-profile packaging.

The length of the bent section 10A from which the coupling material 13 has been removed in part, is adequately selected according to the bending radius and/or the cladding diameter of single-core fibers 11 (fiber outer diameter), but the length is preferably as long as possible because the flexibility improves with increasing removal length (D2 - D1).

The shape of the connector 20A may be a type to be fixed to a single-bore ferrule or a type to be fixed to a multi-bore ferrule.

### (Second Embodiment)

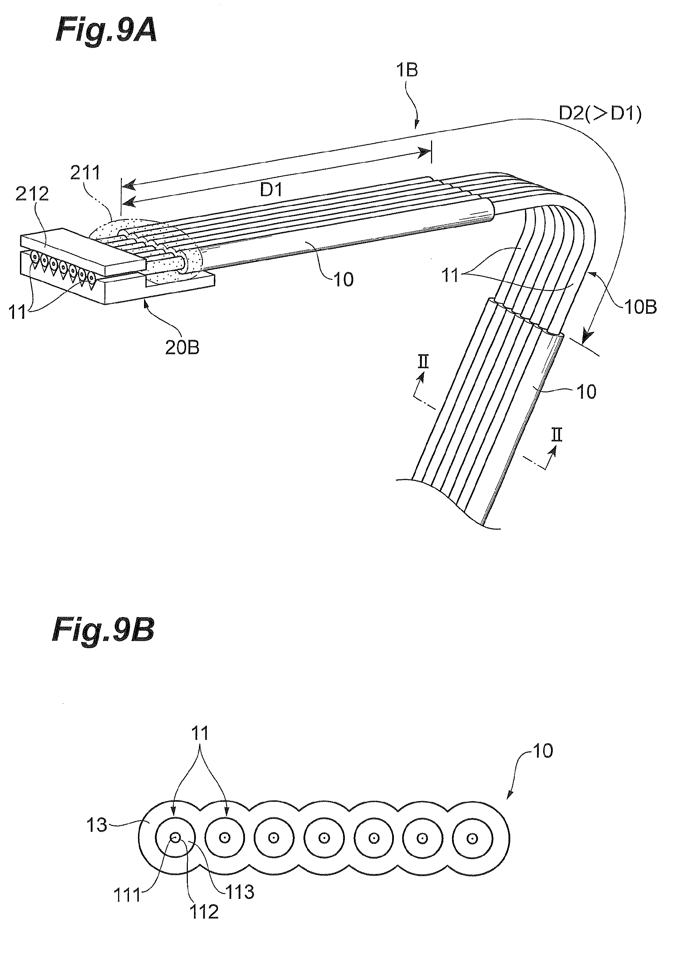

Figs. 9A and 9B are drawings showing a schematic structure of the connector-incorporated multi-core optical fiber 1B according to the second embodiment. The typical structure of the optical fiber applicable to the connector-incorporated multi-core optical fiber 1B according to the second embodiment is shown in Fig. 2. Fig. 9B is a sectional view of the connector-incorporated multi-core optical fiber 1B along the line II-II in Fig. 9A.

The connector-incorporated multi-core optical fiber 1B according to the second embodiment has a ribbon shape in which a plurality of optical fibers 11 are integrated by the coupling material 13 in a state in which the optical fibers 11 are arranged on a common plane. The connector-incorporated multi-core optical fiber 1B is also provided with a fiber body (of ribbon shape) extending along a predetermined axis, and a connector 20B fixed to one end of the fiber body. The fiber body of the ribbon shape also includes a plurality of optical fibers 11, and is composed of bundle sections 10 in which these optical fibers 11 are integrated by the coupling material 13, and an intermediate region 10B (bent section) between the bundle sections 10. The coupling material 13 is removed in part from the bent section 10B, whereby each of the optical fibers 11 is exposed.

The connector 20B with V-grooves for individually positioning the respective optical fibers 11 is fixed to one end of the fiber body. Specifically, the ends of the respective optical fibers 11 located at one end of the fiber body are set in the V-grooves of the connector 20B in a state in which resin coatings are removed from the respective ends and the fiber outer diameters of the respective ends are adjusted, and they are fixed there by a press member 212. The tip end of the bundle section 10 (tip end of the coupling material 13) is fixed to the connector 20B with an adhesive 211. In the second embodiment, deviations of the fiber outer diameters of the respective optical fibers 11 are also not more than 1 µm and preferably not more than 0.5 µm.

The bent section 10B in the fiber body is located in a region between a position at the distance D1 from the connector 20B fixed to one end of the fiber body and a position at the distance D2 (> D1) from the connector 20B.

As described above, the present invention provides the connector-incorporated multi-core optical fibers with the high optical transmission spatial density and with the excellent bending property.

## Claims

1. A connector-incorporated multi-core optical fiber comprising:
a fiber body extending along a predetermined axis, said fiber body consisting of a plurality of optical fibers assembled, and a coupling material integrating the plurality of optical fibers in a state in which each of the optical fibers is enclosed therein; and
a connector fixed to one end of the fiber body,
wherein in an intermediate region of the fiber body in the connector-incorporated multi-core optical fiber, which is located between a position at a first distance from the connector and a position at a second distance longer than the first distance from the connector, the coupling material in the intermediate region is removed in part so as to expose parts of the respective optical fibers located in the intermediate region.

2. The connector-incorporated multi-core optical fiber according to claim 1, wherein ends of the respective optical fibers at the one end of the connector-incorporated multi-core optical fiber are inserted in a ferrule of the connector in a state in which fiber outer diameters of the respective ends are adjusted.

3. The connector-incorporated multi-core optical fiber according to claim 1 or 2, wherein ends of the respective optical fibers at the one end of the connector-incorporated multi-core optical fiber are inserted together with one or more fiber arrangement members in a ferrule of the connector.

4. The connector-incorporated multi-core optical fiber according to any one of claims 1 to 3, wherein deviations of fiber outer diameters of the respective optical fibers are not more than 1 µm.

5. The connector-incorporated multi-core optical fiber according to any one of claims 1 to 3, wherein deviations of fiber outer diameters of the respective optical fibers are not more than 0.5 µm.

6. The connector-incorporated multi-core optical fiber according to any one of claims 1 to 5, wherein bending losses in a bending radius of 10 mm at the wavelength of 1550 nm, of the respective optical fibers are not more than 0.75 dB/turn.

7. The connector-incorporated multi-core optical fiber according to any one of claims 1 to 5, wherein bending losses in a bending radius of 5 mm at the wavelength of 1550 nm, of the respective optical fibers are not more than 0.15 dB/turn.

8. The connector-incorporated multi-core optical fiber according to any one of claims 1 to 5, wherein bending losses in a bending radius of 3 mm at the wavelength of 1550 nm, of the respective optical fibers are not more than 0.3 dB/turn.
